Europäisches Patentamt

European Patent Office

Office européen des brevets

(11) Veröffentlichungsnummer: **0 349 674**
**A2**

# (12) EUROPÄISCHE PATENTANMELDUNG

(21) Anmeldenummer: 88118620.9

(22) Anmeldetag: 09.11.88

(51) Int. Cl.⁴: **H02K 5/128**

(30) Priorität: 08.07.88 DE 3823113

(43) Veröffentlichungstag der Anmeldung:
**10.01.90 Patentblatt 90/02**

(84) Benannte Vertragsstaaten:
**DE FR GB IT NL**

(71) Anmelder: **URANIT GmbH**
**Stetternicher Staatsforst**
**D-5170 Jülich(DE)**

(72) Erfinder: **Schmitz, Bernd-Horst**
**Obersteinstrasse 58**
**D-5190 Stolberg(DE)**
Erfinder: **Humpert, Josef**
**Wasserkall 8**
**D-5162 Niederzier(DE)**
Erfinder: **Corr, Horst**
**Nordring 47e**
**D-5132 Übach-Palenberg(DE)**

(74) Vertreter: **Gottlob, Peter**
**Kernforschungszentrum Karlsruhe GmbH**
**Abt. PAL Weberstrasse 5 Postfach 3640**
**D-7500 Karlsruhe 1(DE)**

(54) **Verfahren zum Herstellen eines Spalttopfes aus Faserverbundwerkstoff.**

(57) Die Erfindung betrifft ein Verfahren zum Herstellen eines Spalttopfes für elektrisch oder magnetische Antriebsaggregate aus Faserverbundwerkstoff mit einem Anschlußflansch und einem abgeflacht gewölbten Boden, der gegenüber dem zylindrischen Teil des Spalttopfes verstärkt is. Der Mantel des Spalttopfes wird aus Schichten von Umfangs- und Helixwicklungen gewickelt. Zur Herstellung des Topfbodens wird ein Wickeldorn verwendet, bei dem wenigstens ein stirnseitiges Ende (Polkappe) eine Kontur aufweist, die der Innenkontur des Topfbodens entspricht; die Fasern für die Helixwicklungen werden radial um die Polkappe des Wickeldorns unter Anlage an den Zapfen geführt. Nach dem Entfernen des Wickeldorns wird in den Topfboden eine Verstärkungs- und Verschlußkappe eingeklebt, die mit ihrem Rand bis in den zylindrischen Teil des Topfes reicht.

Fig.1

## Verfahren zum Herstellen eines Spalttopfes aus Faserverbundwerkstoff

Die Erfindung betrifft ein Verfahren zum Herstellen eines Spalttopfes aus Faserverbundwerkstoff für elektrische oder magnetische Antriebsaggregate gemäß dem Oberbegriff von Patentanspruch 1.

Ein Spalttopf der gattungsgemäßen Art ist aus der DE 36 36 404 A1 bekannt. Dabei bilden Mantel, Boden und Anschlußflansch ein integrales, in Preßtechnik hergestelltes Bauteil. Unter den vorgegebenen technischen Randbedingungen (möglichst kleine Spaltweite und kompakte Bauweise der Aggregate) sind bei diesen Spalttöpfen die anwendbaren Betriebsdrücke auf Werte bis etwa 16 bar Nenndruck begrenzt.

Die Erfindung hat zur Aufgabe, ein Verfahren zur Herstellung von Spalttöpfen aus Faserverbundwerkstoff so zu gestalten, daß die damit produzierten Erzeugnisse auch bei sehr hohen Betriebsdrükken formstabil bleiben bei Wandstärken, wie sie den herkömmlich verwendeten metallischen Spalttöpfen entsprechen. Darüber hinaus soll das Verfahren für die Serienfertigung geeignet sein.

Zur Lösung dieser Aufgabe werden die im Kennzeichen von Anspruch 1 enthaltenen Fertigungsschritte vorgeschlagen. Die hierauf bezogenen Unteransprüche beinhalten vorteilhafte Ausgestaltungen und Weiterbildungen dieser Lösung.

Die beschriebene Wickeltechnik, bei der der Topfboden im Anschluß an die Helixwicklungen mit angewickelt wird, gestattet die Herstellung formstabiler, dünnwandiger Spalttöpfe, die im Mantel- und im Bodenbereich sehr hohen Betriebsdrücken standhalten, z.B. bei einem Topfdurchmesser von 133 mm und einer Wanddicke des Mantels von 1 mm bis zu 100 bar. Verwendet man einen Wickeldorn mit zwei Polkappen, so können in einem Arbeitsgang zwei Spalttöpfe gleichzeitig gewickelt werden; nach dem Wickeln wird das Erzeugnis z.B. in der Mitte durchtrennt und von dem Wickeldorn abgezogen.

Ein Ausführungsbeispiel wird im folgenden anhand der Zeichnungen erläutert:

die Figur 1 zeigt schematisch einen Wickeldorn mit Faserablagesystem,

die Figur 1a in vergrößertem Maßstab einen Mantelausschnitt des Spalttopfes,

die Figur 2 eine Ansicht auf den Wickeldorn in Pfeilrichtung "A" von Figur 1,

die Figur 3 einen doppelwandigen Spalttopf aus Faserverbundwerkstoff.

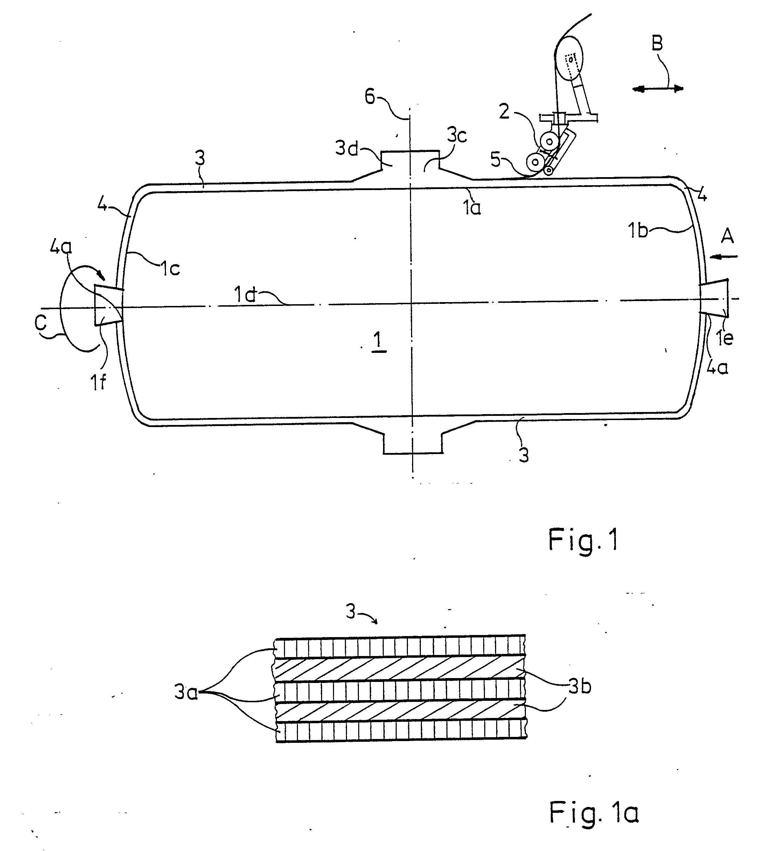

Der Wickeldorn 1 gemäß Figur 1 besteht aus einem langgestreckten zylindrischen Teil 1a, das an seinen beiden stirnseitigen Enden in je ein abgeflacht gewölbte Polkappe 1b, 1c übergeht. Zentral zur Drehachse 1d des Wickeldorns sind an den Polkappen 1b, 1c je eine von den Polkappen abstehender, zentraler Zapfen 1e, 1f zum Antrieb bzw. zur Zentrierung des Wickeldorns angebracht (Antriebs- und Zentriereinrichtung sind aus Gründen der besseren Übersichtlichkeit nicht dargestellt). Die Zapfen 1e, 1f sind zu den Polkappen 1b, 1c hin sich konisch verjüngend ausgebildet.

Dem Wickeldorn 1 ist ein Faserablegesystem 2 zugeordnet, dessen hin- und hergehende Bewegung (Doppelpfeil B) mit der Drehbewegung (Drehpfeil C) des Wickeldorns zur Herstellung von Umfangs- und Helixwicklungen sowie der radialen Wicklungen für den Topfboden abgestimmt ist.

Zur Herstellung des Mantels 3 des Spalttopfes werden auf dem Wickeldorn abwechselnd Schichten aus Umfangswicklungen 3a und Schichten aus Helixwicklungen 3b gewickelt, wie dies in Figur 1a verdeutlicht ist. Die Umfangswicklungen haben eine geringe Steigung zur Aufnahme radialer Druckkräfte. Die Helixwicklungen werden unter einem Winkel von 10° bis 40°, vorzugsweise von 15° bis 25°, gemessen gegen die Längsachse 1d, gewickelt zur Aufnahme von Biege- und Längskräften. Die Polkappen 1b, 1c haben eine Kontur, die, bis auf die herausragenden Zapfen 1e, 1f, der Innenkontur des herzustellenden Topfbodens entspricht.

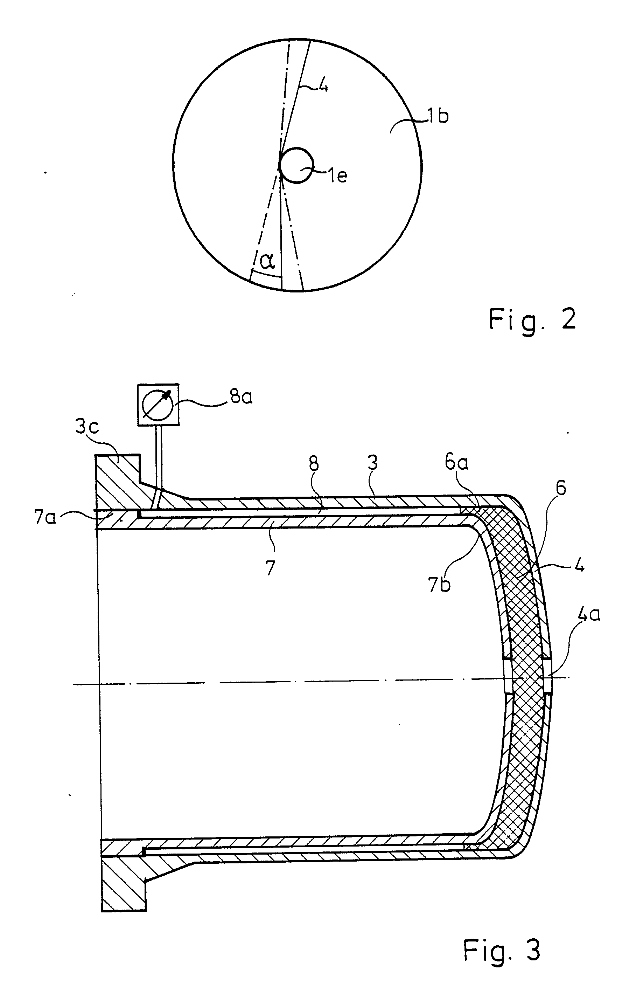

Zur Herstellung des Topfbodens 4 werden die Fasern 5 für die Helixwicklungen 3b an den Wendestellen des Schlittens (nicht dargestellt) des Ablagesystems 2 radial um die Polkappen 1b, 1c unter Anlage an die Zapfen; 1e, 1f geführt. Dabei werden die Drehbewegung des Wickeldorns (Pfeil C) und die laterale Bewegung (Pfeil B) des Ablagesystems 2 so aufeinander abgestimmt, daß sich ein Umschlingungswinkel $\alpha$ um die Zapfen 1e, 1f zwischen 10° und 40°, vorzugsweise von 20°, einstellt (Fig. 2). Zur Herstellung der Anschlußflansche werden im mittleren Bereich des Wickeldorns auf den Mantel 3 zusätzliche Umfangswicklungen 3c, 3d angewickelt. Nach dem Aushärten des Matrixmaterials, normalerweise ein Kunstharz, mit dem die Fasern 5 getränkt sind, wird das so entstandene Gebilde im mittleren Bereich entlang der Linie 6 durchtrennt und von dem Wickeldorn 1a, 1b, 1c und den Zapfen 1e, 1f getrennt, so daß gleichzeitig zwei Töpfe aus Faserverbundwerkstoff entstehen, die je eine zentrale, durch die Zapfen 1e, 1f verursachte Öffnung 4a in den Topfböden 4 aufweisen.

Wie aus Figur 3 zu ersehen ist, wird in den Topfboden 4 eine die Öffnung 4a überdeckende Verstärkungs- und verschlußkappe 6, ebenfalls aus Faserverbundwerkstoff (z.B. Prepreg), eingeklebt, die mit ihrem Rand 6a bis in den zylindrischen Teil (Mantel 3) des Topfes reicht. Dadurch erhält man einen formstabilen und hohen Betriebsdrücken standhaltenden Spalttopf aus Faserverbundwerkstoff, der herkömmlichen Spalttöpfen aus Metall sowohl hinsichtlich der Herstellungsmöglichkeiten (keine Längenbeschränkung) als auch seiner Eigenschaften (keine Wirbelstromverluste) überlegen ist.

Sofern der Spalttopf besonders aggressiven oder abrasiven Medien ausgesetzt werden soll, können seine Innen- und/oder Außenflächen mit einer kzusätzlichen korrosions- oder verschleißfesten Schicht, z.B. aus teilstabilisiertem Zirkonoxid, versehen werden.

Im manchen Anwendungsfällen werden aus Sicherheitsgründen doppelwandige Spalttöpfe mit einem Kontrollraum im Mantelbereich verlangt. In diesem Fall wird nach derselben Wickeltechnik wie vorstehend beschrieben ein weiterer Topf als Innentopf 7 hergestellt, dessen äußere Bodenkontur der Innenkontur der Verstärkungs- und Verschlußkappe 6 entspricht. An sein offenes Ende wird anstelle eines Anschlußflansches mittels zusätzlicher Umfangswicklungen ein Zentrier- und Dichtring 7a angewickelt, dessen Außendurchmesser dem Innendurchmesser des Mantels 3 entspricht. Dieser Innentopf 7 wird mit seinem Boden 7b und seinem Zentrier- und Dichtring 7a in den äußeren Topf 3, 4, 6 eingeklebt. Dadurch entsteht im Mantelbereich ein zylindrischer Zwischenraum 8, der mit einem Kontrollmedium gefüllt und mit einem Überwachungsinstrument, z.B. einem Druckwächter 8a, verbunden werden kann. Hält man den Druck des Kontrollmediums auf einem Wert zwischen dem Außen- und dem Innendruck des Spalttopfes, so kann man bei einer Änderung der Anzeige des Druckwächters 8a auf eine Undichtigkeit des Außen- oder Innentopfes schließen. Beide Töpfe können so ausgelegt werden, daß sie unabhängig voneinander dem jeweiligen Betriebsdruck standhalten.

**Ansprüche**

1. Verfahren zum Herstellen eines Spalttopfes aus Faserverbundwerkstoff mit einem Anschlußflansch und einem abgeflacht gewölbten Boden, der gegenüber dem zylindrischen Teil des Spalttopfes verstärkt ist,
gekennzeichnet durch folgendes Vorgehen:
a) der Mantel (3) wird aus Schichten von Umfangs- und Helixwicklungen (3a, 3b) unter Verwendung eines entfernbaren Wickeldorns (1) gewickelt, wobei die Helixwicklungen (3b) unter einem Winkel - gemessen gegen die Längsachse (1d) - von 10° bis 40° gewickelt werden, vorzugsweise unter einem Winkel von 15° bis 25°;
b) zur Herstellung des Topfbodens wird ein Wickeldorn verwendet,

b₁) bei dem wenigstens ein stirnseitiges Ende (Polkappe (1b)) eine Kontur aufweist, die der Innenkontur des Topfbodens (4) entspricht, bis auf einen aus der Polkappe (4) herausragenden zentralen Zapfen (1c) zum Antrieb bzw. zum Zentrieren des Wickeldorns (1);
b₂) die Fasern (5) für die Helixwicklungen (3b) werden radial um die Polkappe (1b) des Wickeldorns (1) unter Anlage an den Zapfen (1e) geführt, wobei als Umschlingungswinkel (α) um den Zapfen (1e) ein Winkel zwischen 10° und 40°, vorzugsweise 20° eingestellt wird;
c) nach dem Entfernen des Wickeldorns (1) und dem Aushärten der Matrix des Faserverbundwerkstoffs wird in den Topfboden (4) eine dessen zentrale, durch den Zapfen (1e) verursachte Öffnung (4a) überdeckende Verstärkungs- und Verschlußkappe (6) eingeklebt, die mit ihrem Rand (6a) bis in den zylindrischen Teil (3) des Topfes reicht.

2. Verfahren nach Anspruch 1, dadurch gekennzeichnet, daß der Anschlußflansch durch Umfangswicklungen (3c) angewickelt wird.

3. Verfahren nach Anspruch 1, dadurch gekennzeichnet, daß die Innen- und/oder Außenflächen des Spalttopfes wenigstens mit einer korrosions- oder verschleißfesten Zusatzschicht, z.B. aus teilstabilisiertem Zirkonoxid, versehen werden.

4. Verfahren nach Anspruch 1 zur Herstellung eines aus Innen-und Außentopf bestehenden Spalttopfes, dadurch gekennzeichnet, daß gemäß den Merkmalen a) und b) (b₁, b₂) ein weiterer Topf als Innentopf (7) hergestellt wird, dessen äußere Bodenkontur der Innenkontur der Verstärkungs- und Verschlußkappe (6) entspricht, und an dessen offenes Ende mittels Umfangswicklungen ein Zentrier- und Dichtring (7a) angewickelt wird, und daß dieser Innentopf (7) unter Belassen eines zylindrischen Zwischenraumes (8) mit seinem Boden (7b) und seinem Zentrier- und Dichtring (7a) in den Außentopf (3, 4, 6) eingeklebt wird.

Fig. 1

Fig. 1a

Fig. 2

Fig. 3